# EUROPEAN PATENT APPLICATION

(11) **EP 4 761 056 A1**
(43) Date of publication of application: **17.06.2026**
(21) Application number: 25212439.1
(22) Date of filing: 30.10.2025
(51) Int. Cl.: H02J 7/56

(54) **SYSTEM AND METHOD FOR MAINTAINING THE STATE OF HEALTH OF A BATTERY ENERGY STORAGE SYSTEM**

(30) Priority: 27.11.2024 IN 202411092804
(71) Applicant: Honeywell International Inc., Charlotte, NC 28202 (US)
(72) Inventor: KASTELEIN, Bastiaan, Charlotte, 28202 (US); MANIKFAN, Sameer D., Charlotte, 28202 (US)
(74) Representative: Haseltine Lake Kempner LLP

(57) **Abstract**

The system and method couples first and second multiplexers to a plurality of battery racks of a storage battery and to a voltage converter that sequentially connects each battery of the plurality of battery racks to the voltage converter. A controller sends control signals to the voltage converter and to the first multiplexer to select one of the plurality of battery racks and to the second multiplexer to cause the second multiplexer to sequentially connect each of the other battery racks to the voltage converter to charge the one battery rack to a maximum SOC or alternately discharge the one battery rack to a minimum SOC and repeating the process for each battery rack.

## Description

### TECHNICAL FIELD

This disclosure is generally directed to battery energy storage systems (BESS). More specifically, it relates to a system and method for maintaining the state of health (SOH) of a BESS battery by periodically cycling the batteries contained in the BESS as a background process when the BESS is in an idle state.

### BACKGROUND

Currently, most electric power is generated by large, centralized power plants, such as nuclear power plants, hydroelectric plants, and fossil fuel powered plants. These large facilities frequently generate power using non-renewable sources of energy, such as coal or gas. Such power plants commonly have good economies of scale, however due to various economic and operational reasons power plants may not provide all the power required to service the loads of the electrical grid services by such power plants. Battery energy storage systems (BESS) having stored power may be connected at a power plant, substation, transmission line or at a customer site to selectively use stored battery energy to supplement or provide all the power required by the grid and thereby preventing service interruptions. A BESS uses chemical energy storage batteries that store energy such as for example a Lithium ion (LiON) batteries, lead acid batteries (Pb), or sodium-sulfur (NAS) batteries.

When a BESS is operated as a power backup system, it is often idle and almost never depleted to its lowest state of charge (SOC). When the battery cells of the BESS battery are next discharged, the SOC of each cell becomes different as the usage time of the battery is increased due to the difference in self-discharge rate between the cells. If the battery continues to be discharged despite the unbalanced SOC, specific cells contained in the BESS battery that may have a lower SOC become over-discharged, resulting in unstable operation of the BESS battery and a risk of overcharging and or total depletion of the cells. This leads to degradation of the capacity of the BESS battery and shortening of the individual battery life expectancy, measured as the SOH, and its ability to store charge relative to when it was new.

The present disclosure describes a system and method for measuring the SOH of each battery rack comprising a BESS battery by periodically cycling the battery rack from a maximum to a minimum SOC using the energy contained in and available from the other battery racks of the BESS as a background process at times when the BESS is in an idle state.

### SUMMARY

This disclosure relates to a system and method for periodically cycling a battery rack of a BESS battery from a maximum to a minimum SOC using the energy contained in and available from the other battery racks of the BESS battery as a background process at times when BESS is in an idle state.

In a first embodiment a system is disclosed that comprises a first switch connected to a plurality of battery racks of the BESS which one battery rack is selected by the first switch to connect to a voltage converter. A second switch is connected to the voltage converter and to the plurality of battery racks of which one other of the battery racks can be selected. A controller is operable to provide control signals to the voltage converter and the first and second switches wherein responsive to a first control signal the initial state of charge of the selected battery rack is recorded in a battery management system (BMS). Further responsive to the first control signal, the second switch is operated to connect sequentially each of the other battery racks to the voltage converter to transfer battery energy contained in each of the other battery racks to the voltage converter and the selected battery rack that charges the selected battery rack to a maximum state of charge (SOC) and to discharge the selected battery rack responsive to a second control signal from the controller by sequentially connecting the second switch to each of the other battery racks to discharge the selected battery rack via the voltage converter to the other battery racks until the selected battery rack reaches a minimum SOC.

The second switch is further operated responsive to a third control signal from the controller to connect sequentially each of the other battery racks to the voltage converter transferring the battery energy discharged to each of the other battery racks back to the voltage converter and charge the selected battery rack until the selected battery rack reaches the initial state of charge recorded to the BMS.

In a second embodiment a method is disclosed for transferring battery energy between a plurality of the battery racks of a BESS the method comprising connecting a first switch to a plurality of battery racks and to a controller. The first switch is operable responsive to a first control signal from the controller to select and connect one of the plurality of connected battery racks to a voltage converter and to record the initial state of charge of the selected battery rack in a battery management system. The method further includes connecting a second switch to each of the plurality of battery racks and to the controller, the second switch operable responsive to the first control signal to connect sequentially all other battery racks of the plurality of battery racks to the voltage converter transferring a portion of the battery energy contained in each of the other battery racks to the voltage converter, wherein the portion of the transferred battery energy from the other battery racks is used to charge the selected battery rack connected to the first switch until the selected battery rack reaches a maximum state of charge.

The method further includes sending second control signal from the controller that responsive to the second control signal, causes the second switch to connect sequentially all other battery racks of the plurality of battery racks to the voltage converter and to the first switch, transferring by discharging a portion of the battery energy contained in the selected battery rack to each of the other battery racks of the plurality of battery racks connected to the second switch until the selected battery rack reaches a minimum state of charge and further responsive to a third control signal sent from the controller to the second switch, to sequentially connect each battery rack of the plurality of battery racks to the voltage converter transferring the battery energy discharged to each of the other battery racks from the selected battery rack to the voltage converter to charge the selected battery rack until the selected battery rack reaches the initial state of charge recorded by the BMS.

In a third embodiment a computer readable medium containing instructions is disclosed that when executed by at least one processing device of a controller, causes the controller to send control signals to connect a first switch and a voltage converter to a selected one battery rack of a plurality of battery racks of a battery energy storage system and to record the initial state of charge of the selected battery rack and further cause a second switch to connect sequentially the other battery racks that are not the selected battery rack to the voltage converter, wherein responsive to a first control signal from the controller, the second switch connects sequentially all other battery racks of the plurality of battery racks to the voltage converter transferring a portion of the battery energy contained in each of the other battery racks to the voltage converter, wherein the portion of transferred battery energy is used by the voltage converter to charge the selected battery rack until the selected battery rack reaches a maximum state of charge, and responsive to a second control signal from the controller the second switch connects sequentially all other battery racks of the plurality of battery racks to the voltage converter and the first switch, wherein the voltage converter transfers by discharging a portion of the battery energy contained in the selected battery rack to charge each of the other battery racks of the plurality of battery racks connected to the second switch until the selected battery rack reaches a minimum state of charge, and responsive to a third control signal from the controller the second switch sequentially connects each battery rack of the plurality of battery racks to the voltage converter transferring the battery energy discharged to each of the other battery racks from the selected battery rack to the voltage converter to charge the selected battery rack until the selected battery rack reaches the recorded initial state of charge.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIG. 1 is a diagram schematically illustrating a BESS container;
FIG. 2 is a diagram schematically illustrating the components of an exemplary BESS battery;
FIG. 3 is diagram schematically illustrating a first embodiment of an exemplary system for periodically cycling and calibrating the battery racks of a BESS battery according to the present disclosure;
FIG. 4 is diagram schematically illustrating a second embodiment of an exemplary system for periodically cycling and calibrating the battery racks of a BESS battery according to the present disclosure; and
FIG. 5 is a block diagram of the method for periodically cycling the battery racks of a BESS battery according to the present disclosure.

### DETAILED DESCRIPTION

The figures discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

When a BESS system is operated as a power backup system, it is often idle and almost never depleted to its lowest SOC. This means an actual SOH of the cells contained in the BESS battery are not measured. The SOH of a battery cell is a measurement of a battery's general health, or its ability to store charge relative to when it was new. The SOH of a battery cell is typically expressed as the ratio of a battery's maximum charge to its rated capacity, expressed as a percentage. SOH provides information about a battery cell's life expectancy and when it may need to be replaced. Battery cells start with an SOH of 100% and decrease over time as the battery degrades. When a battery cell SOH reaches 70% or 80%, it is usually considered to be at the end of its life. A degraded battery cell runs the risk of overcharging the cell or discharging to full depletion.

A battery management system (BMS) manages the battery racks of a BESS battery. When the BESS idles too long, the BMS loses the ability to estimate any reduction in capacity in the BESS battery. For example, a battery cell that idles for 3 months loses 1% of its capacity due to calendar ageing. A battery rack containing a plurality of battery cells that had a capacity of 730kWh at the beginning of an idle time, is left with 722.7kWh at the end. When the battery rack is charged with 365kWh, the uncalibrated BMS shows the SOC of the battery rack as 50%, but due to extended idle period of 3 months of this example, the battery rack is actually at a reduced capacity of 50.5%. When the BESS is charged with 693.5kWh, after an extended idle period of 3 months an SOC reading showing the capacity of the battery rack at 95%, may be at 95.95% capacity. The cycling of the cells contained in a battery rack from a minimum to a maximum SOC, while measuring the amount of charge (i.e., time-integrated electrical current) added or removed, provides an accurate measurement of the SOH of a BESS battery.

A battery rack SOC is typically calibrated when the BESS battery is installed and commissioned and before it is used. Calibration is also required periodically, for example, every three to six months. The calibration process, however, requires the BESS battery to be taken out of service and cycled from a maximum SOC limit to a minimum SOC limit multiple times. This is time-consuming and renders the BESS unavailable.

The system and method of the present disclosure measures the SOH of each battery rack of a BESS by periodically cycling the battery racks from a maximum to a minimum SOC using the energy contained in and available from the other battery racks of the BESS as a background process at times when BESS is in an idle state.

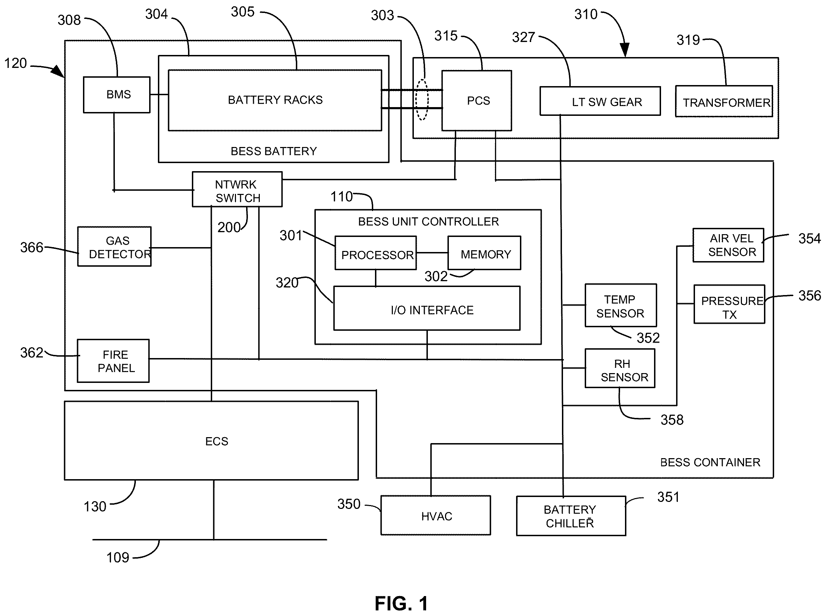

FIG. 1 illustrates an exemplary BESS container 120 that is organized as a self-contained package. Each BESS container 120 can be used to power stand-alone deployments of BESS 120 containers such as, for example, a building or a business enterprise or microgrids. In such stand-alone deployments a single BESS container 120 or multiple BESS containers 120 can provide power to a neighborhood of homes or to a business district. The major components of the BESS container 120 include a BESS unit controller 110, a storage battery 304 housed within the BESS container 120 that contain battery racks 305, a power conversion skid 310 containing a power conversion system 315, and an energy control system (ECS) controller 130. The BESS container may further include at least a power a heating ventilation, and air conditioning (HVAC) subsystem 350 providing heating and cooling for the BESS container 120, a battery chiller subsystem 351 for cooling the storage battery 304 and sensors 352, 354, 356 and 358 required to monitor various environmental conditions of the BESS container 120.

The BESS unit controller 110 is tasked to provide for the safe and reliable operation of a BESS container 120. The BESS unit controller 110 monitors the operation of BESS container 120 preventing operation of the BESS during fault conditions by shutting down a faulty subsystem and/or sending notifications and alarms to a local or remotely located operator station (not shown) or to a mobile communication device (not shown). Alarms may be sent using different priority levels if a component, sensor, or subsystem of the BESS unit container 120 fails or becomes faulty. The BESS unit controller 110 interfaces with all the components of a container such as the power conversion system 315, the storage battery 304, and the HVAC and chiller subsystems 350, 351, etc.

The BESS unit controller is comprised of at least one processor 301, at least one memory device 302, and at least one I/O interface 320. The processor 301 executes instructions that may be loaded into memory 302. Processor 301 may include any suitable number(s) and type(s) of processing or other devices in any suitable arrangement. Example types of processing devices include microprocessors, microcontrollers, digital signal processors, field programmable gate arrays, application specific integrated circuits, and discreet circuitry. Processor 301 executes the various programs that operate the various operating modes, states, and safety systems of the BESS container 120.

Memory 302 represents any structure(s) capable of storing and facilitating retrieval of information (such as data, program code, and/or other suitable information on a temporary or permanent basis). Memory 302 may represent a random-access memory or any other suitable volatile or non-volatile storage device(s). The memory may also include one or more components or devices supporting longer-term storage of data, such as a ready only memory, hard drive, flash memory, or optical disc.

The I/O interface 320 supports communications with the other systems or devices contained in the BESS container 120. For example, the communications interface 320 could include I/O modules and a network interface card that may support communications through any suitable physical wired communication link or bus between the BESS unit controller 110 and the subsystems and sensors of the BESS container 120. For example, the I/O interface 320 may include an I/O module that can interface control signals to connected HVAC subsystem 350 and the battery chiller 351 using a serial digital output. The I/O interface 320 may also include an analog module that can receive 4-20 mA current loop signals from the various analog sensors located in the BESS container 120 that monitor certain environmental conditions within the BESS container, such as, the temperature sensor 352, air velocity sensor 354, pressure sensor and transmitter 356 and relative humidity (RH) sensor 358. The I/O interface 320 may also include an Ethernet interface for the bidirectional communication of control signals and data between the BMS 308, the ECS 130 and various safety devises such as, for example, the fire detection panel 362 of a fire suppression system (not shown) and a gas detector 366, that detects hydrogen gas that may be degassed by lithium batteries as they degrade.

The BESS storage battery 304 is comprised of multiple battery racks 305 that are electrically interconnected in series and in parallel. Each battery rack comprises a plurality of battery cells organized as battery modules that are also electrically interconnected in series and in parallel. The multiple battery modules that form the multiple battery racks 305 are stacked within the BESS container 120. Charging and discharging of the BESS battery 304 considers the SOC of the battery racks 305 comprising the BESS battery 304 and ensures that charging does not cause increased power dissipation and heating of the cells contained in the battery racks 305.

Each BESS container 120 is also connected to a power conversion skid 310 contained in a housing physically separated from the BESS container 120 but electrically coupled to it. The power conversion skid 310 typically includes a bidirectional power conversion system (PCS) 315, electrical mains 303 and associated electrical switch gear components. The PCS 315 converts an AC voltage supplied by the grid, to DC voltage to charge the BESS battery racks 305 using electrical mains 303. The PCS 315 also converts the DC power provided by the BESS battery racks 305 into an AC voltage, which can provide electrical power back to the grid, a microgrid or to a connected plant, or building. The power conversion skid 310 may also include low tension (LT) switch gear 327 and transformer 319 to provide electrical power to low tension or low voltage electrical networks.

The BESS unit controller 110 is further operatively connected to a BESS ECS controller 130. The BESS ECS controller 130 acts as a supervisory controller to one or more BESS unit controllers 110. A BESS ECS 130 can control one or more BESS containers 120 using a control network 109. The BESS unit controller 110 of each BESS container 120 gathers the operating parameters of a connected BESS container 120 and sends the data to its supervising BESS ECS controller 130 for control of the charging and discharging requirements of the BESS container(s) 120. For example, BESS ECS controller 130 computes the power reference for each PCS 315 attached to one or more BESS containers 120, considering the current operational state of a BESS container 120, such as alarms related to failure of subsystems or faults, and diagnostics data of critical subsystems, such as, the battery racks 305, PCS 315 and HVAC.

When multiple BESS containers 120 and their power conversion skids 310 are used at any site to provide electrical power at a stand-alone site or microgrid, the BESS ECS controller 130 determines the total charging power or discharging power that should be provided to the deployment and distributes the charging or discharging power requirements to the connected multiple BESS unit controllers 110. For example, the BESS ECS controller 130 computes a power reference for the different PCS 315 units, considering the power capacity of each PCS 315 and the power and energy capacity of the BESS container 120. The power and energy capacity of the BESS container 120 is determined by the number of battery racks 305 in operation. When multiple BESS containers 120 are deployed at a stand-alone plant site, or at a microgrid site, and the multiple BESS containers 120 are connected to a single PCS 315, the BESS ECS controller 130 computes a power reference for the single PCS 315. However, if more than a single PCSs 315, is available in multiple BESS deployments the BESS ECS controller 130 computes power reference for all the PCSs 315 available to be connected.

In installations having multiple BESS containers 120 the balancing state of the battery racks 305 for one BESS container 120 with the battery racks of another BESS container is not taken into account by BMS 308 of the BESS container 120. In such multiple BESS container 120 installations the BESS ECS controller 130 manages each BMS 308 through its respective BESS unit controller 110, via network switch 200. The ECS controller 130 provides a state of charge (SOC) balancing through BMS 308 for each BESS storage battery 304 of the multiple connected BESS containers 120.

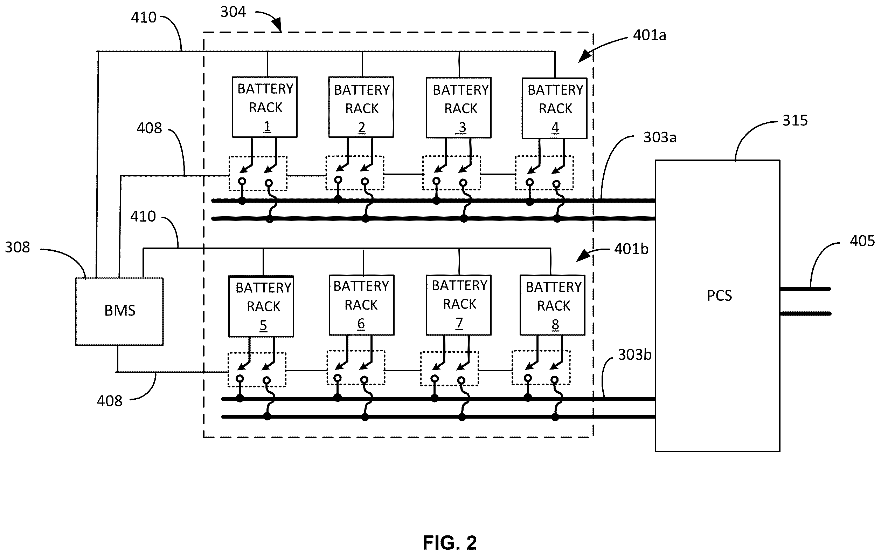

FIG. 2 illustrates the components of an exemplary BESS battery 304. It should be noted that the example BESS battery 304 shown in FIG. 2, is only one example of a BESS battery organization, and the BESS components depicted in FIG.2 have been simplified to easily explain the present disclosure. The exemplary BESS battery 304 contains eight battery racks 1-8 organized in two strings of four battery racks. A first string 401a contains battery racks 1-4 and a second string 401b contains battery racks 5-8. A high voltage bus bar 303a connects each battery rack 1-4 of the first string 401a to the PCS 315. A second high voltage bus bar 303b connects each battery rack 5-8 of the second string 401b to the PCS 315. Each bus bar 303a, 303b of a typical BESS battery 304 is designed to provide up to 1500 volts and 1000 amps of electrical power.

The PCS 315 converts AC power received at AC leads 405 to DC power. The AC power is delivered to the PCS 315 from the electrical grid or from other alternate energy sources, such as for example renewable energy sources, or from diesel generators. The PCS 315 converts the delivered AC power to DC voltages and currents that are coupled to each battery rack 1-8 using bus bars 303a and 303b. DC power from the PCS 315 is used to charge and store energy in the battery racks 1-8 of the BESS battery 304. Stored energy contained in each battery rack 1-8 is subsequently connected to a respective bus bar 303a, 303b for transfer of the stored energy as DC power to the PCS 315 for conversion by the PCS 315 to AC power for output on AC leads 405 to a load. The load being the electrical grid, a microgrid, or a plant or building at an electrical customer site.

The transfer of DC power to and from the PCS 315 to each battery rack 1-8 is controlled by BMS 308. BMS 308 is communicatively connected via communication lines 408 to a switching device associated with each battery rack 1-8. Each switching device connects an associated battery rack 1-8 to an associated bus bar 303a, 303b. The BMS 308 controls which battery rack 1-8 is connected to bus bars 303a, 303b for charging or for discharging of a battery rack. Each battery rack 1-8 may also include sensors contained in each battery rack 1-8 that are communicatively connected to BMS 308 via communication lines 410 that read and report to BMS 308 the voltage, current, temperature of the battery cells comprising each battery rack 1-8. While voltage, current and temperature are measured directly from sensors attached to battery rack cells, SOC and SOH are inferred by BMS 308. Estimation of SOC and SOH by the BMS 308 can be inaccurate if the BESS battery 304 has not gone through calibration tests or full battery charge and discharge cycles.

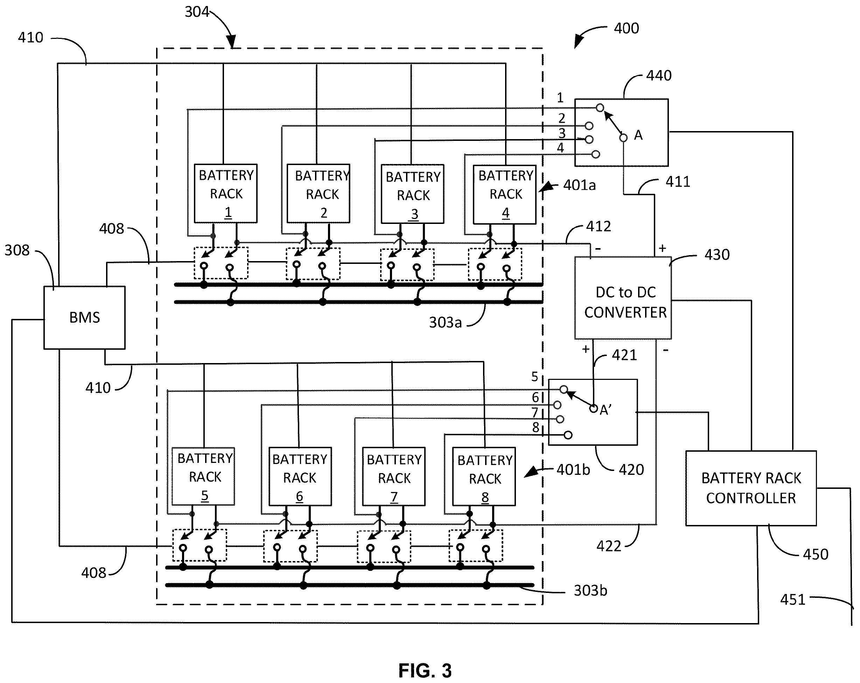

FIG. 3 illustrates a first embodiment an exemplary system 400 for periodically cycling and calibrating the battery racks of the BESS battery 304 from 0-100% SOC using the energy charge contained in, and available from, the other battery racks of the BESS battery 304. The process of cycling the cells is performed as a background process when the BESS is in an idle state. The system illustrated in FIG. 3, connects each battery rack 1-4 of the first string 401a to a switch device comprised of a first 1 x n multiplexer circuit 440. A multiplexer input A of the first multiplexer circuit 440 is electrically connected to a first positive terminal of a DC-DC converter 430 via line 411. The outputs 1-4 of the first multiplexer circuit 440 are connected to a respective positive terminal of each battery rack 1-4 of the first battery string 401a. For example, in FIG. 3 first multiplexer outputs 1-4 are each connected to a respective positive terminal of battery racks 1-4. The first multiplexer circuit 440 operates to selectively connect a positive DC potential from the first positive terminal of the DC-DC converter via line 411 to input A of the multiplexer circuit 440 and selectively to one of the multiplexer outputs 1-4. An electrical circuit is completed from each switched battery rack 1-4 back to a first negative terminal of the DC-DC converter 430 via line 412.

Similarly, as explained above, each battery rack 5-8 of the second string 401b is connected to a second switch device comprised of a second multiplexer circuit 420. A multiplexer input A' of the second multiplexer circuit 420 is electrically connected from a second positive terminal of the DC-DC converter 430 via line 421. The input A' of multiplexer circuit 420 is selectively switched to connect the multiplexer input to a selective one multiplexer output 5-8. The second multiplexer circuit 420 is connected to a respective positive terminal of each battery rack 5-8 of the second string 401b. For example, in FIG. 3 a selective one multiplexer output 5-8 from the second multiplexer circuit 420 is connected to the positive terminal of a respective battery rack 5-8. The second multiplexer 420 is operated to apply a positive DC potential to selectively connect one of the multiplexer outputs 5-8 to the DC-DC converter 430 second positive terminal via input 421. An electrical circuit is completed from each switched battery rack 5-8 to a second negative terminal of the DC-DC converter 430 via line 422.

As will be appreciated, the position of each first and second multiplexers 440, 420 can be operated to switch and connect each battery rack 1-4 to each battery rack 5-8 through the DC-DC converter 430 and thereby establishing a DC electrical current path between each selected battery rack 1-4 and each selected battery rack 5-8 contained in the BESS battery 304. Each battery rack 1-8 and the cells comprising the battery racks 1-8 connected to system 400 can be charged/or discharged into selected battery racks 1-8 of the BESS battery 304 by system 400 or vice versa. Because only one battery rack is charging into one other battery rack and does so with a reduced C- rating of for example, 0.1 (or depletion in 10 hours), the maximum electrical current going through the lines from the multiplexers 440, 420 to the battery racks 1-8 is limited, which makes a simple and low-cost implementation possible, as the cabling and multiplexers 440, 420 and DC-DC converter 430 can be rated for a low maximum current, e.g. 50 amps.

A battery rack controller 450 is communicatively connected to the first and second multiplexers 440, 420 the DC-DC converter 430 and to BMS 308. The battery rack controller or controller 450 controls the SOH measurements and SOC cycling process, by sending control signals to each of the first and second multiplexers 440, 420 that set the position of the multiplexers 440, 420 and operate the DC-DC converter 430. The battery rack controller 450 may send control signals to the DC-DC converter 430 to set a current limit of charge or discharge between two connected battery racks, for example, a 1C charge or depletion rate. The battery rack controller 450 may be implemented as a separate device having a computer processor, a memory and an interface that executes an SOH/SOC cycling software application. The application when executed by the battery rack controller 450 generates and sends the control signals to operate the cycling of system 400. Alternatively, the SOH/SOC cycling software application may be an executable program stored in memory 302 of the BESS unit controller 110 and executed by processor 301. The SOH/SOC cycling application when executed would periodically cycle each battery rack 1-8 contained in the BESS battery from a minimum to maximum SOC using the charge available in the other battery racks 1-8. The cycling is run as background process at times when the BESS container 120 is in an idle state.

The battery rack controller 450 may be further interfaced via communication line 451 with the BESS ECS 130 to access energy demand/supply forecasting systems to understand when the best available time would be to start the background SOH measurements and SOC cycling process. The resulting SOC and SOH data can be uploaded to BMS 308 of the BESS container 120 to establish a more accurate SOH for charging the battery racks 1-8 from the high voltage bus bars 303a, 303b.

The SOH of the cycled and therefore calibrated battery racks 1-8 can also be sent from the BESS ECS 130 to analytics programs hosted in the cloud to monitor the operating performance of the BESS battery 304. Accurate estimation of SOC requires considering the reduced energy capacity of the battery racks between SOC calibration test cycles to identify degradation of the BESS. The early identification of degradation can be useful in tracking potential situations that may lead to reduced operational capacity of a BESS battery. Battery operational data such as, for example, current, voltage, temperature, SOC, and SOH data are periodically collected once during a time interval defined by a user. The BESS ECS 130 can be arranged to calculate a rate of change in the collected parameters and if the rate of change exceeds a configurable threshold, the data collected is sent to a battery data repository hosted on an energy control system SCADA server in the cloud by BESS ECS 130 for review and analysis.

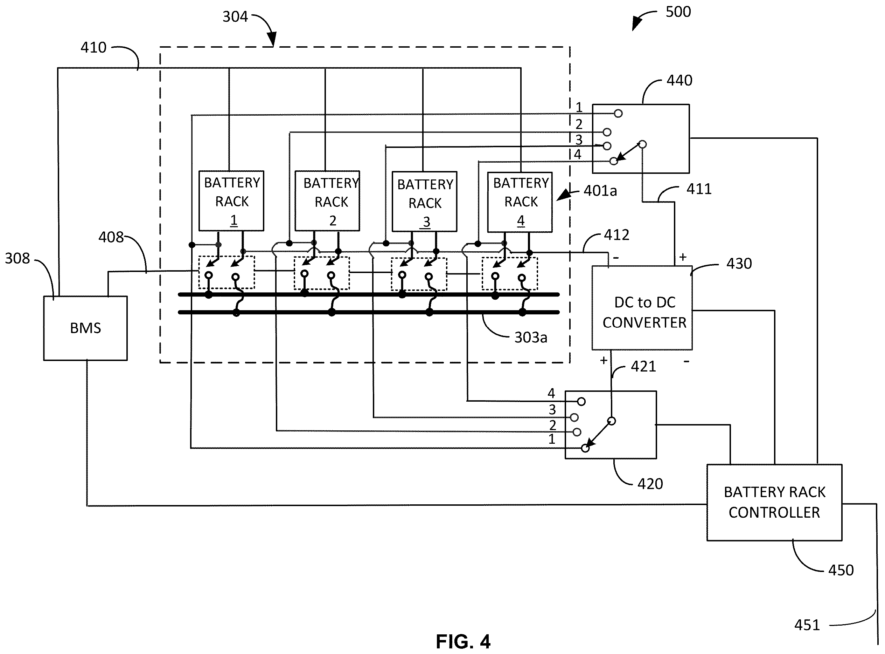

FIG. 4 illustrates a second embodiment of an exemplary system 500 for periodically cycling the battery racks contained in smaller BESS deployments that are organized on a single string 401a. Each battery rack 1-4 of string 401a is connected to both the first and the second multiplexer circuits 440, 420. Input 411 from the first positive terminal of the DC-DC converter 430 is selectively applied to the input A of multiplexer circuit 440 and switched to one of the multiplexer outputs 1-4. The second multiplexer circuit 420 is also connected to a respective positive terminal of each battery rack 1-4. As shown in FIG. 4, multiplexer output 4 from the first multiplexer circuit 440 connects the positive terminal of battery rack 4 to the first positive terminal of the DC-DC converter 430. The second positive terminal of the DC-DC converter 430 is connected via input line 421 and input A' of the second multiplexer circuit 420 to terminal output 1. An electrical circuit is completed between the selected positive terminals of each of the battery racks 1-4 via a first negative terminal of the DC-DC converter 430 via line 412. The electrical circuit establishes a charge/discharge path between battery rack 4 and battery rack 1 in this example. Any battery rack 1-4 in a single string deployment of a BESS battery 304 can be interconnected though multiplexers 440, 420 and DC-DC converter 430 to battery racks 1-4 using the energy charge contained in and available from the other battery racks of the BESS battery 304. The battery rack controller 450 is communicatively connected to the first and second multiplexer circuits 440, 420 the DC-DC converter and to BMS 308 to operate and control system 500 as was explained above for system 400 in FIG. 3. Because only three battery racks are available to charge or alternately deplete the battery rack being cycled, a slightly higher C-rating would be required to be used in charging the battery rack being cycled from the other battery racks in the string, for example 0.2C. The battery rack controller 450, providing the control signals to the DC-DC converter 430 to set the correct C-rating.

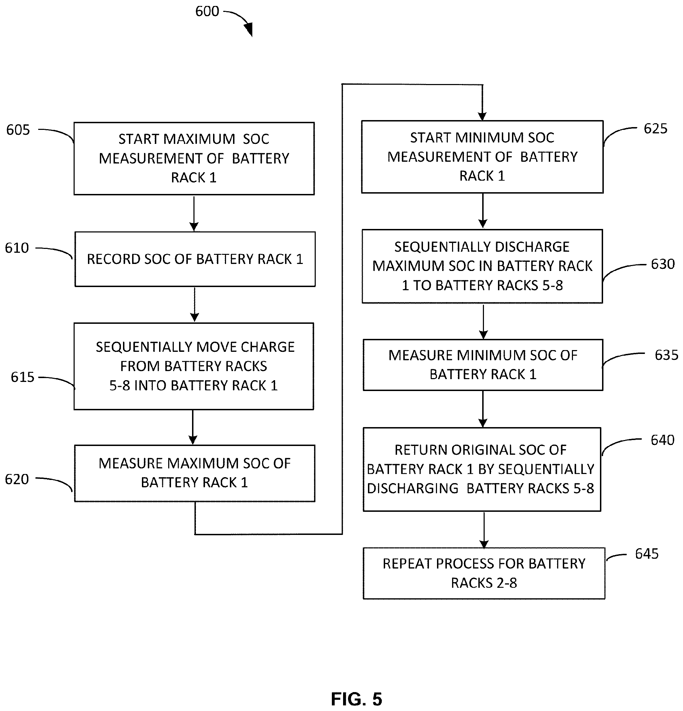

Method 600 shown in FIG. 5 illustrates an exemplary method for periodically cycling the battery racks of a BESS battery 304. The method 600 will be described using a BESS battery 304 organized using the exemplary system 400 and having battery racks 1-8 shown in FIG. 3. It will be appreciated that method 600 can also be easily used in a BESS battery organized as a single string of battery racks shown in FIG. 4. Method 600 cycles each battery rack of the BESS battery 304 by first charging a first battery rack to measure a maximum SOC then discharging the first battery rack to measure its minimum SOC. The maximum and minimum SOC is then recorded to BMS 308 as the SOH of the battery rack to accurately indicate the amount of energy that the now calibrated battery rack can provide. Each battery rack contained in the BESS battery is cycled accordingly until all the battery racks contained in the BESS are cycled and the cells contained in the battery rack are calibrated.

The periodic cycling of the battery racks of the BESS battery are made during the idle periods when the BESS is inactive and not providing or is scheduled to provide power to customers. During idle periods, the BESS battery 304 is maintained at a storage capacity, typically at 50% SOC. The cycling of the BESS battery racks during idle periods does not require power from the PCS 315. The method 600 uses the energy contained in the other battery racks of the BESS battery 304 to temporarily cycle a selected target battery rack of the BESS battery 304 to maximum SOC. The target battery rack is then discharged into the other battery racks contained in the BESS battery until the target battery rack is discharged to minimum SOC. The selected target battery rack is then returned to its original SOC by retrieving the energy discharged to the other battery racks and retuned back to the target battery rack. Each battery rack contained in the BESS battery is cycled in the same manner until all the battery racks are cycled and their cells calibrated.

With renewed reference to FIG. 3 and to FIG. 5 the method 600 starts by cycling a first battery rack, for example battery rack 1 of FIG. 3. In step 605 the temporary charging of battery rack 1 is started to measure the maximum SOC of battery rack 1. Next, in step 610 the battery rack controller 450 sends control signals to BMS 308 to record the current SOC of first battery rack 1 at the start of cycling in order to enable the return of battery rack 1 to its pre-cycled SOC later in step 640 after the cycling of the battery rack 1 is completed.

Next in step 615 electrical energy stored in battery racks 5-8 is moved sequentially from each battery rack 5-8 to battery rack 1. The battery rack controller 450 sends control signals to the first multiplexer circuit 440 to connect the first multiplexer circuit 440 input A to multiplexer output 1. This establishes an electrical circuit between battery rack 1, multiplexer circuit 440 and the DC-DC converter 430. The positive side of the electrical circuit is connected via the multiplexer's 440 output 1 to input A and from input A to the first positive terminal of the DC-DC converter via input line 411. The negative side of the electrical circuit connects battery rack 1 to the first negative terminal of the DC-DC converter 430 via line 412.

The battery rack controller 450 also sends control signals to the second multiplexer circuit 420 to connect the second multiplexer 420 input A' to the second multiplexer's output 5. This establishes an electrical circuit between battery rack 5, multiplexer circuit 420 and the DC-DC converter 430. The positive side of the electrical circuit connected via multiplexer's 420 output 5 to input A' and from input A' to the second positive terminal of the DC-DC converter 430 via input line 421. The negative side of the electrical circuit connects battery rack 5 to the second negative terminal of the DC-DC converter 430 via line 422.

The DC-DC converter 430 is then activated by the battery rack controller 450 into a charge mode wherein the stored energy in the battery rack 5 is input to the DC-DC converter 430 and the second positive and negative terminals. The DC-DC converter 430 then outputs a charge current and voltage from the first positive and negative terminal of the DC-DC converter 430. The charge currents and voltage are applied to battery rack 1 via the electrical circuit made between multiplexer circuit 440 and line 412. The DC-DC converter 430 limits the charge current and voltage output from the converter 430 to a C-rate established by the battery rack controller 450. The battery rack controller 450 may set a charge rate that will finally charge battery rack 1 to maximum SOC using equal rates of charge depletions from each of battery racks 5-8. For example, if battery rack 1 has a pre-cycling SOC of 50% then to charge the battery rack 1 to maximum SOC would require discharging the storage charge in each battery rack 5-8 by approximately 12.5% and moving the stored energy from each battery rack 5-8 to battery rack 1.

After battery rack 5 has been discharged by 12.5% and the energy added to battery rack 1, the battery rack controller 450 causes input A' of multiplexer circuit 420 to be switched from multiplexer output 5 to multiplexer 420 output 6. This disconnects battery rack 5 and connects battery rack 6 to the DC-DC converter 430. Battery rack 6 now provides energy from battery rack 6 to battery rack 1. Again, after 12.5% of the available energy in battery rack 6 has been discharged, the battery rack controller 450 sends control signals to multiplexer 420 to switch from battery rack 6 to battery rack 7.

This sequential switching of battery racks 5-8 continues until all the battery racks 5-8 have contributed their allotted energy to battery rack 1 and cause battery rack 1 to be at a measurable maximum SOC, wherein in the next step 620 the maximum SOC of battery rack 1 is recorded by BMS 308.

Next in step 625 the system 400 is prepared to discharge battery rack 1 to a minimum SOC. To measure a minimum SOC, that battery rack 1 will need to be discharged to the minimum SOC. Therefore, 100% of the stored energy in battery 1 will be required to be discharged. This is done by discharging battery rack 1 and distributing the stored energy in battery rack 1 equally among battery racks 5-8. The DC-DC converter 430 is then commanded by the battery rack controller 450 to switch from a battery charger to a battery discharger. That is, the first positive and negative terminals of the DC-DC converter 430 will receive current and voltage from battery rack 1 to output the received current and voltage to battery racks 5-8.

In step 630 the battery rack controller 450 sends control signals to multiplexer circuit 420 that switches input A' to connect to multiplexer output 5 discharging battery rack 1 to battery rack 5. Battery rack 1 is discharged by 25% and the discharged energy stored in battery rack 5. As in the charging cycle for battery rack 1, DC-DC converter 430 limits the charge current and voltage output to battery rack 5 to a C-rate established by the battery rack controller 450 to charge battery racks 5-8 as they are sequentially switched in to receive energy from battery rack 1. After battery rack 1 has been discharged by 25% and the discharged energy added to battery rack 5, the battery rack controller 450 causes input A' of multiplexer circuit 420 to be switched from multiplexer output 5 to multiplexer output 6. This disconnects battery rack 5 and connects battery rack 6 to the DC-DC converter 430. Battery rack 6 now receives energy from battery rack 1. Again, when another 25% of the available energy in battery rack 1 is discharged into battery rack 6 the controller 450 sends control signals to multiplexer 420 to switch from battery rack 6 to battery rack 7. This sequential switching of battery racks 5-8 continues until all the battery racks 5-8 have received their allotted charge energy from battery rack 1 and cause battery rack 1 to be at a measurable minimum SOC, wherein in the next step 635 the minimum SOC of battery rack 1 is recorded to BMS 308.

Next in step 640, the battery rack 1 is returned to the SOC recorded by the BMS 308 in step 610. This is done by discharging each battery rack 5-8 that received energy from battery rack 1 during the sequential discharge of battery rack 1 in step 630. For example, if the original SOC of battery rack 1 was at 50% SOC and the battery rack 1 SOC after measuring the minimum SOC in step 630 is approximately 0% SOC, then the battery rack controller will send control signals to change the DC-DC converter to be operated as a charger and retrieve from each battery rack 5-8 a 12.5% charge that is moved to battery rack 1. Multiplexer 420 outputs 5-8 are sequentially switched to retrieve 12.5% of the energy stored in each battery rack 5-8 that is transferred back to battery rack 1 until battery rack 1 returns to the pre-cycling SOC of 50%.

The method just described in steps 605-640 is repeated in step 645 for each of the battery racks 2-8. Multiplexer circuit 440 selecting the battery rack 2-4 to be cycled and multiplexer 420 selecting the battery racks 5-8 used for storing or extracting energy used in the cycling process of method 600.

The operational assignments of multiplexers 440, 420 reverse when battery racks 5-8 are being cycled. When battery racks 5-8 are cycled, battery racks 1-4 act to store and extract electrical energy to battery racks 5-8. Multiplexer circuit 440 sequences and switches battery racks 1-4 to cause the storage or discharge of energy for use in cycling battery racks 5-8 as discussed above.

It may be advantageous to set forth definitions of certain words and phrases used throughout this patent document. The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims is intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," or "controller" within a claim is understood and intended to refer to structures known to those skilled in the relevant art, as further modified or enhanced by the features of the claims themselves and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A system for transferring battery energy between a plurality of battery racks of a battery energy storage system comprising:
a first switch electrically connected to each battery rack of the plurality of battery racks;
a second switch electrically connected to each battery rack of the plurality of battery racks;
a voltage converter electrically connected to the first and the second switch; and
a controller communicatively connected to the voltage converter and the first and second switches, the controller operable to provide control signals to the voltage converter and the first and second switches,
wherein responsive to a first control signal the first switch electrically connects a selected battery rack of the plurality of battery racks to the voltage converter and the second switch connects one other battery rack of the plurality of battery racks to the voltage converter for transferring battery energy between the selected battery rack and the one other battery rack.

2. The system of claim 1, wherein the system further includes a battery management system (BMS) communicatively connected to each battery rack of the plurality of battery racks and to the controller, wherein responsive to the first control signal the initial state of charge of the selected battery rack is recorded by the BMS.

3. The system of claim 2, wherein responsive to the control signals the voltage converter is caused to operate to charge or discharge the selected battery rack.

4. The system of claim 3, wherein responsive to the first control signal the second switch connects sequentially all other battery racks of the plurality of battery racks to the voltage converter transferring a portion of the energy contained in each of the other battery racks to the voltage converter causing the voltage converter to charge the selected battery rack until the selected battery rack reaches a maximum state of charge.

5. The system of claim 4, wherein responsive to a second control signal from the controller to the voltage converter and to the second switch, the second switch connects sequentially all other battery racks of the plurality of battery racks to the voltage converter causing the voltage converter to transfer by discharging a portion of the battery energy contained in the selected battery rack to each of the other battery racks of the plurality of battery racks until the selected battery rack reaches a minimum state of charge.

6. The system of claim 5, wherein responsive to a third control signal the second switch connects sequentially each battery rack of the plurality of battery racks to the voltage converter transferring the battery energy discharged to each of the other battery racks from the selected battery rack to the voltage converter causing the voltage converter to charge the selected battery rack until the selected battery rack reaches the initial state of charge recorded by the BMS.

7. The system of claim 6, wherein the first switch is operable by the controller to select and electrically connect another battery rack of the plurality of battery racks to the voltage converter to assume the role of the selected battery rack.

8. The system of claim 1, wherein the first switch is a multiplexer circuit, the multiplexer circuit includes:
a plurality of outputs having each of the plurality of outputs electrically connected to a respective battery rack of the plurality of battery racks; and
at least one input connected to the voltage converter,
wherein the multiplexer input is electrically connected to one of the multiplexer outputs when the multiplexer circuit receives control signals from the controller.

9. The system of claim 1, wherein the second switch is a multiplexer circuit, the multiplexer circuit includes:
a plurality of outputs having each output of the plurality of outputs electrically connected to each battery rack; and
at least one input connected to the voltage converter,
wherein the input is electrically connected to one of the multiplexer outputs when the multiplexer circuit receives control signals from the controller.

10. A method for transferring battery energy between a plurality of battery racks of a battery energy storage system, the method comprising:
connecting a first switch to each of the plurality of battery racks and to a controller, the first switch operable responsive to a first control signal sent by the controller to connect a selected battery rack to a voltage converter; and
connecting a second switch to each of the plurality of battery racks and to the controller, the second switch operable responsive to the first control signal to connect one other battery rack of the plurality of battery racks to the voltage converter that is not the selected battery rack and transfer battery energy between the selected battery rack and the one other battery rack.

11. The method of claim 10, wherein the battery energy storage system includes a battery management system (BMS) communicatively connected to each battery rack of the plurality of battery racks and to the controller, the method further comprising:
recording the initial state of charge of the selected battery rack in the BMS responsive to the first control signal.

12. The method of claim 11, wherein responsive to the first control signal the second switch connects sequentially all other battery racks of the plurality of battery racks to the voltage converter transferring a portion of the battery energy contained in each of the other battery racks to the voltage converter, wherein the portion of the transferred battery energy is used by the voltage converter to charge the selected battery rack until the selected battery rack reaches a maximum state of charge.

13. The method of claim 11, wherein responsive to a second control signal, the second switch connects sequentially all other battery racks of the plurality of battery racks to the voltage converter and the first switch, transferring by discharging by the voltage converter a portion of the battery energy contained in the selected battery rack and charge each of the other battery racks of the plurality of battery racks connected to the second switch with a portion of the battery energy discharged from the selected battery rack until the selected battery rack reaches a minimum state of charge.

14. The method of claim 13, wherein responsive to a third control signal the second switch sequentially connects each battery rack of the plurality of battery racks to the voltage converter transferring the battery energy discharged to each of the other battery racks from the selected battery rack to the voltage converter causing the voltage converter to charge the selected battery rack until the selected battery rack reaches the initial state of charge recorded by the BMS.

15. The method of claim 14, wherein the first switch is operable by the controller to select and connect another battery rack of the plurality of battery racks to the voltage converter to assume the role of the selected battery rack.
